# EUROPEAN PATENT APPLICATION

(11) **EP 4 570 591 A1**
(43) Date of publication of application: **18.06.2025**
(21) Application number: 24219287.0
(22) Date of filing: 12.12.2024
(51) Int. Cl.: B60P 3/07, B60P 3/12, B62D 33/02, B62D 33/06, B62D 33/03

(54) **VEHICLE FOR TRANSPORTING MOTOR VEHICLES**

(30) Priority: 14.12.2023 IT 202300026643
(71) Applicant: FERRARI S.p.A., 41100 Modena (IT)
(72) Inventor: LUMINI, Sandro, 41100 MODENA (IT)
(74) Representative: Studio Torta S.p.A.

(57) **Abstract**

A vehicle (1) for transporting a motor vehicle (100) comprising a frame (2) and a plurality of wheels (3, 4, 5) rotatable relative to the frame (2) about respective rotational axes (A, B, C). The frame (2) comprises, in turn, a cabin (7) adapted to house at least one driver of the vehicle (1) and a loading platform (6) adapted to support the motor vehicle (100) during transport. The vehicle (1) further comprises a front end (1a) and a rear end (1b) opposite to each other along an advancement direction (V) of the vehicle (1). The cabin (7) comprises a first portion (7a), which extends between the front end (1a) and the loading platform (6) along a longitudinal direction (X) of the vehicle (1) and a second portion (7b), which extends cantilevered from the first portion (7a) at the loading platform (6) along the longitudinal direction (X). The second portion (7b) is at least in part spaced apart from the loading platform (6) along a vertical direction (Z) and defines a housing (60) together with the loading platform (6) for housing the motor vehicle (100).

## Description

### CROSS-REFERENCE TO RELATED APPLICATIONS

This patent application claims priority from Italian patent application no. 102023000026643 filed on December 14, 2023, the entire disclosure of which is incorporated herein by reference.

### TECHNICAL FIELD

This invention relates to a vehicle for transporting motor vehicles.

### BACKGROUND

Various solutions for transporting motor vehicles by road are known, including car transporters and trailers.

Such solutions are commonly used to transport sports or historic cars, for example, to the location of a race, rally, or exhibition. There are, in fact, various reasons why reaching the location directly in such cars is either not recommended or not possible.

Firstly, sports cars are generally not designed for making long journeys. In fact, these sports cars are most often equipped with small boots, which do not provide an adequate level of comfort for the driver and any passengers.

Secondly, any damage to the cars during a race could compromise their usability during the return journey.

In addition, some cars are not approved for road use or cannot be used in areas where there is a ban on driving above certain pollution limits.

Moreover, the use of such sports or historic cars on long motorway journeys could negatively affect their residual life and economic value.

The known solutions for transporting cars, however, leave a lot of room for improvement.

In particular, car transporters comprise a frame, a plurality of wheels that move in relation to the frame about their respective rotational axes, and a plurality of platforms that are pivotable in relation to the frame, each of which is designed to support a respective car to be transported. The platforms may be distributed over several levels and the loading of cars onto these platforms is done by means of ramps and/or winches.

Car transporters prove to be a very rigid solution for transporting cars. In fact, car transporters are hardly manoeuvrable due to their length and can generally only be driven by individuals with specific driving licences. In addition, loading cars onto and unloading them from the car transporter must be carried out by highly specialised personnel. Moreover, car transporters are subject to rather strict speed limits, which leads to a lengthening of the time needed to transport the cars.

Some of the above considerations also apply to trailers. In particular, trailers comprise a frame and a plurality of wheels rotating in relation to the frame around respective rotational axes. The trailers also include a loading platform to support the car to be transported and can be operationally connected to a vehicle in order to be towed by it.

However, the trailer and the vehicle pulling it are generally subject to speed limits. For example, in at least some laws, driving is prohibited in the fastest lane.

In addition, the driving of vehicles with trailers is generally only permitted to individuals with specific driving licences.

In light of the drawbacks described above, there is a need for a vehicle for transporting motor vehicles that is flexible and easily manoeuvrable.

One purpose of the invention is to respond to the need described above, preferably in a simple and economical way.

### DESCRIPTION OF THE INVENTION

The purpose is achieved with a vehicle for transporting motor vehicles as defined in claim 1. The dependent claims define particular embodiments of the invention.

### BRIEF DESCRIPTION OF THE DRAWINGS

Below, an embodiment of the invention is described to better understand the same by way of non-limiting example and with reference to the attached drawings in which:
- Figure 1 is a side view of a vehicle for transporting motor vehicles in a first operating configuration;
- Figure 2 is a side view of the vehicle in Figure 1 in a second operating configuration;
- Figure 3 is a top view of the vehicle in Figures 1 and 2 with parts removed for clarity;
- Figure 4 is a front view of the vehicle from Figures 1 to 3 in the first operating configuration; and
- Figure 5 is a front view of the vehicle in Figures 1 to 4 in the second operating configuration.

### EMBODIMENTS OF THE INVENTION

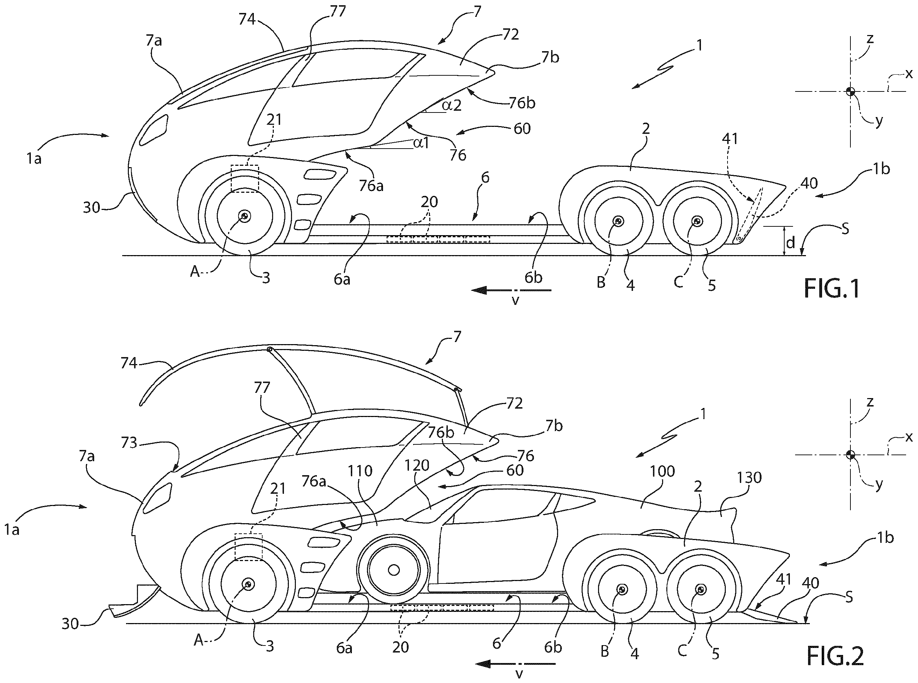

In Figure 1, the reference number 1 is used to indicate, as a whole, a vehicle for transporting motor vehicles 100. Preferably and without implying any loss of generality thereby, the motor vehicle 100 is a sports car, for example a vintage car.

In the remainder of this description, the adjectives "front" and "rear" and the related adverbial expressions are to be understood with reference to an advancement direction V of the vehicle 1 or motor vehicle 100. In addition, the expressions "above" and "below" and the like must be interpreted with reference to the gravity vector g acting on the vehicle 1.

In the embodiment illustrated, the motor vehicle 100 comprises a front portion 110, a rear portion 130, and a windscreen 120 arranged on the front portion 110 (Figure 2). However, the motor vehicle 100 could be shaped differently.

As illustrated in Figure 1, the vehicle 1 comprises a frame 2 and a plurality of wheels 3, 4, 5 that rotate relative to the frame 2 about respective rotational axes A, B, C.

It is possible to define:
- a longitudinal direction X of the vehicle 1;
- a direction Z orthogonal to the direction X and directed vertically to the ground S on which wheels 3, 4, 5 are resting; and
- a direction Y orthogonal to the directions X and Z.

The vehicle 1 also comprises a front end 1a and a rear end 1b with respect to the advancement direction V. In addition, the front end 1a and the rear end 1b are arranged opposed to each other along the longitudinal direction X.

With reference to Figures 1 and 2, the plurality of wheels 3, 4, 5 comprises:
- a pair of front wheels 3 arranged on the front end 1a and rotating about the rotational axis A;
- a pair of rear wheels 5 arranged on the rear end 1b and rotating about the rotational axis C.

The plurality of wheels 3, 4, 5 comprises, in addition, a pair of wheels 4 interposed between the front wheels 3 and the rear wheels 5 along the direction X and rotating around the rotational axis B.

In detail, the rotational axes A, B and C are directed transversely to the direction X and are parallel to each other. In addition, the rotational axes A, B and C are spaced apart from each other parallel to the direction X. In further detail, the rotational axis B is closer to the rotational axis C than the rotational axis A along the direction X.

The frame 2 includes, in turn, a loading platform 6 adapted to accommodate the motor vehicle 100 and support it during transport. The loading platform 6 is arranged perpendicular to the direction Z.

In detail, the loading platform 6 extends along the direction X between the rotational axis A and the rear end 1b (Figures 1, 2 and 3) .

The frame 2 also comprises a cabin 7 designed to accommodate at least one driver of the vehicle 1 and any passengers.

Advantageously, the cabin 7 includes:
- a portion 7a, which extends between the front end 1a and the loading platform 6 along the direction X; and
- a portion 7b, which extends cantilevered from the portion 7a at the loading platform 6 along the direction X; this portion 7b is at least partially spaced apart from the loading platform 6 along the direction Z.

The vehicle 1 also includes a housing 60 adapted to at least partially house the motor vehicle 100 arranged on the loading platform 6. The housing 60 is defined by the cabin 7 and the loading platform 6.

In other words, the portion 7a is spaced apart from the loading platform 6 along the direction X, the portion 7b is above the loading platform 6, and not in contact with it, and the housing 60 is arranged below the portion 7b along the direction Z.

In detail, the portion 7a extends anteriorly to the loading platform 6 along the direction X and the portion 7b faces the rear end 1b. (Figures 1, 2 and 3). In further detail, the portion 7a extends at least between the front end 1a and the rotational axis A parallel to the direction X. Accordingly, the extension of the portion 7a parallel to the direction X defines the front overhang of the vehicle 1. The extension of the portion 7a parallel to the direction X is preferably between 1/5 and 1/6 of the overall length of the vehicle 1 along the direction X.

The portion 7b comprises a surface 76 facing the loading platform 6 and is concave in shape.

In detail, proceeding from the front end 1a towards the rear end 1b parallel to the direction X, the distance of the points of the surface 76 from the loading platform 6 along the direction Z increases progressively (Figure 1).

Moreover, the surface 76 preferably comprises a region 76a arranged on the side of the front end 1a and a region 76b arranged on the side of rear end 1b.

Considering a plane passing through the directions X and Z, the region 76a forms angles α1 with the loading platform 6 and the region 76b forms angles α2 with the loading platform 6; the angles α1 are smaller than the angles α2 (Figure 1).

In the embodiment illustrated, the region 76a is curved; consequently, the angles α1 measured at different points of the region 76a have different amplitudes. Similarly, the region 76b is curved; consequently, the angles α2 measured at different points of the region 76b have different amplitudes.

The loading platform 6 comprises, in turn:
- a region 6a on the side of the front end 1a, extending below the portion 7b along the direction Z; and
- a region 6b on the side of the rear end 1b, which is spaced apart from the portion 7b along the direction X.

In detail, the housing 60 is defined by the portion 7b and by the region 6a. In further detail, the housing 60 is delimited at the front by the surface 76.

Preferably, but not necessarily, the housing 60 is adapted to house the motor vehicle 100 at the front portion 110. In detail, the region 76a is designed to face the front portion 110 and the region 76b is designed to face the windscreen 120.

The loading platform 6 is arranged at a distance d from the ground S of less than 350 mm (Figure 1). In detail, the distance d is less than 350 mm both when a motor vehicle 100 is present on the loading platform 6 and when no passenger motor vehicle 100 is present on the loading platform 6. The distance d preferably ranges between 200 and 250 mm. In detail, a distance d of between 200 and 250 mm is comparable to the riser of a generic step, for example of a fixed staircase in a building.

The cabin 7 also comprises:
- a main body 72;
- an opening 73 facing the front end 1a; and
- a door 74 movably coupled to the main body 72 and adapted to selectively obstruct the opening 73.

The opening 73 is adapted to allow the driver and any passengers to enter the cabin 7 and exit the cabin 7.

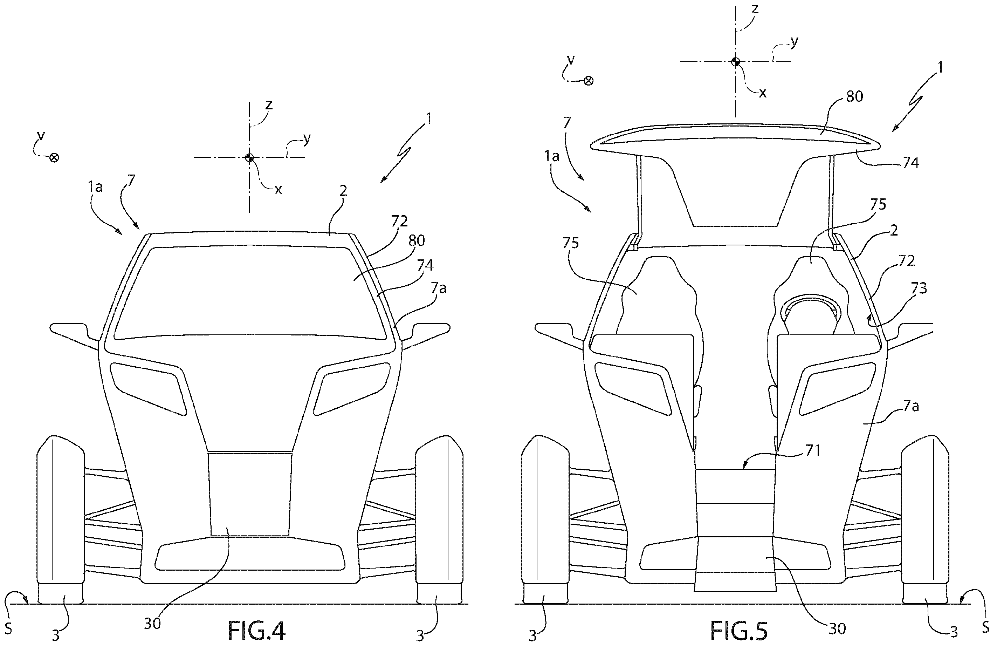

Specifically, the door 74 also faces the front end 1a and rotates with respect to the main body 72 between:
- a lowered position, in which it closes the opening 73 (Figures 1 and 4); and
- a raised position, in which it at least partially unblocks the opening 73 and is spaced apart from it parallel to the direction Z (Figures 2 and 5).

In the embodiment illustrated, the door 74 has a curved profile on a plane passing through the directions X and Z (Figures 1 and 2). In addition, the door 74 includes a windscreen 80 facing the front end 1a.

In other words, the door 74 is a canopy type door and the vehicle 1 is a vehicle of the canopy type.

The cabin 7 also includes a floor 71, which is spaced apart from the loading platform 6 along the direction Z. In particular, the floor 71 is arranged above the loading platform 6 along the direction Z.

In the embodiment illustrated, the cabin 7 also includes two seats 75, respectively for the driver and any passenger and resting on the floor 71.

The cabin 7 preferably includes one or two side doors 77, which can be used for the emergency exit of the driver and/or passengers from the cabin 7. For example, the side doors 77 can be used in the event of a malfunction of the door 74.

The cabin 7 also comprises a ladder 30 that is movable with respect to the main body 72 between a retracted position, in which it is in contact with the main body 72 (Figures 1 and 4), and an extended position (Figure 5), in which it projects with respect to the main body 72 from the side opposite the rear end 1b (Figure 2).

The ladder 30 is, preferably, automatic. Specifically, the vehicle 1 includes drive means - not illustrated - for automatically moving the ladder 30 between the retracted and extended position relative to the frame 2.

The vehicle 1 is preferably an electric or hybrid propulsion vehicle and comprises:
- a plurality of electrical batteries 20 (only a few of which are schematically illustrated in Figures 1 and 2) designed to store electrical energy; and
- an electrical motor 21 (only schematically illustrated in Figures 1 and 2) operationally connected to at least some of the wheels 3, 4, 5 and electrically connected to the electrical batteries 20.

As illustrated in Figures 1 and 2, in a known way, the electrical motor 21 is adapted to transform the electrical energy supplied by the electrical batteries 20 into mechanical energy and to supply this mechanical energy to the pair of front wheels 3, to which it is operationally connected. Therefore, the pair of front wheels 3 constitutes a pair of drive wheels for the vehicle 1.

In particular, the electrical batteries 20 are arranged below the loading platform 6 along the direction Z. In other words, the electrical batteries 20 are designed to be interposed between the loading platform 6 and the ground S along the direction Z.

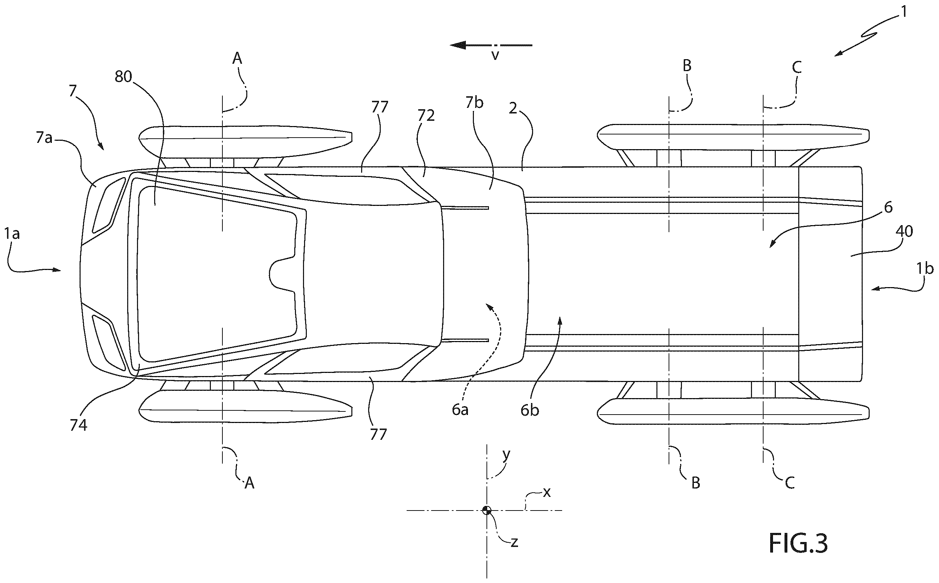

The vehicle 1 also includes a ramp 40 that is movable with respect to the frame 2 between a retracted position, in which it is adapted to be spaced apart from the ground S (Figures 1 and 3) and an extended position, in which it is in contact with the ground S (Figure 2).

In the embodiment illustrated, the ramp 40 is rotatable with respect to the frame 2 between the retracted position and the extended position about a rotational axis perpendicular to the direction X. Specifically, when the ramp 40 is in the retracted position, it extends transversely to the loading platform 6 (Figure 1); when the ramp 40 is in the extended position, it extends cantilevered with respect to the loading platform 6 parallel to the direction X from the opposite side to the front end 1a (Figure 2).

The ramp 40 preferably comprises a flat or substantially flat surface 41 which is adapted to be traversed by the motor vehicle 100 as it is loaded onto the loading platform 6. This surface 41 is adapted to face the front end 1a when the ramp 40 is in the retracted position and to face away from the ground S when the ramp 40 is in the extended position.

The ramp 40 is preferably automatic. In detail, the vehicle 1 includes drive means - not illustrated - for automatically moving the ramp 40 between the retracted and extended position relative to the frame 2.

Moreover, the total mass of the vehicle 1 when unloaded (that is, when no motor vehicle 100 lies on the loading platform 6) preferably ranges between 2 and 2.25 tonnes. In addition, the fully loaded mass of the vehicle 1 is less than 4.25 tonnes.

The vehicle 1 may also include securing means - not illustrated - adapted to secure the motor vehicle 100 to the frame 2. These securing means are adapted to prevent or limit relative sliding between the motor vehicle 100 and the loading platform 6.

The operation of the vehicle 1 according to the invention is described below.

In use, while the vehicle 1 is stationary in relation to the ground S, the ramp 40 is moved from the retracted position (Figure 1) to the extended position (Figure 2) and the motor vehicle 100 is driven onto the loading platform 6 via the ramp 40. For example, the motor vehicle 100 is driven by a driver inside the motor vehicle 100.

The motor vehicle 100 is preferably arranged along the loading platform 6 in such a way that it is accommodated at least partially in the housing 60. Specifically, the front end 110 faces the region 76a and the windscreen 120 faces the region 76b. On the other hand, the portion of the motor vehicle 100 not housed in the housing 60 is arranged at the region 6b.

Once the motor vehicle 100 is properly positioned along the loading platform 6, it is secured by the securing means and the ramp 40 is returned to the retracted position. The driver of the motor vehicle 100 can therefore descend directly from the loading platform 6, the distance d of which from the ground S is such as to allow easy descent without the need for ladders or similar devices.

The cabin 7 is accessed by moving the door 74 from the lowered to the raised position and the ladder 30 from the retracted to the extended position.

After returning the ladder to the retracted position and the door 74 to the lowered position, the vehicle 1 can move the motor vehicle 100 in relation to the ground S.

From the above, the advantages of the vehicle 1 according to the invention are clear.

The vehicle 1 comprises the cabin 7, which is equipped with the portion 7b extending cantilevered from the portion 7a and defining the housing 60, where the motor vehicle 100 can be accommodated. As a result, the motor vehicle 100 can be at least partially inserted below the cabin 7 and the overall length of the vehicle 1 is reduced. This allows great flexibility and manoeuvrability of the vehicle 1 and solves many of the drawbacks of the known solutions discussed in the introduction to this description.

In addition, the claimed configuration allows both the mass of the vehicle 1 and the motor vehicle 100 to be mostly concentrated between the rotational axis A of the front wheels 3 and the rotational axis C of the rear wheels 5. This helps to improve the driveability of the vehicle 1 and thus to limit the time needed to transport the motor vehicle 100 using the vehicle 1.

Moreover, due to the fact that the length of the vehicle 1 is less than 7 m, the vehicle 1 is not subject to any particular speed limit.

Since the motor vehicle 100 is partially housed in the housing 6, during the operation of the vehicle 1, the motor vehicle 100 is shielded from the cabin 7. Thus, the vehicle 1 and the motor vehicle 100 constitute a single unit in terms of aerodynamics.

In addition, the claimed shape of the vehicle 1 includes a sufficiently extended front overhang to ensure high energy absorption in favour of the safety of the cabin 7 occupants and pedestrians.

Since the distance of the points of the surface 76 from the loading platform 6 along the Z direction increases progressively along the direction X, the motor vehicle 100 can conveniently be made to go inside or come outside the housing 60 with limited risk of collision and interference.

Since the surface 76 comprises the regions 76a, 76b and the region 76a is less inclined than the region 76b with respect to the loading platform 6, the region 76a is designed to face the front portion 110 of the motor vehicle 100 and the region 76b is designed to face the windscreen 120 of the passenger motor vehicle 100.

Since the loading platform 6 is arranged at a distance d from the ground S of less than 350 mm, once the motor vehicle 100 is loaded on the loading platform 6, the driver's descent from the passenger motor vehicle 100 and thus from the loading platform 6 can be carried out comfortably without the use of additional elements (for example, steps or ladders).

Moreover, the reduced distance d from the ground S makes it possible to limit the distance of the centre of gravity of the vehicle 1 and of the assembly composed of the vehicle 1 and the motor vehicle 100 lying on the loading platform 6 from the ground S. This makes it possible to considerably increase the driveability of the vehicle 1.

Since the vehicle 1 includes the front door 74, entering the cabin 7 and exiting the cabin 7 is done from the side opposite the loading platform 6 and is particularly easy and ergonomic.

Since the vehicle 1 is an electric or hybrid vehicle, it is possible to limit the pollutant emissions directly attributable to the use of the vehicle 1 and, thus, to the road transport of the motor vehicle 100.

Since the vehicle 1 includes the ramp 40, loading and unloading of the motor vehicle 100 can be done easily, without the need for intervention by specialised operators.

Finally, it is clear that changes may be made to the vehicle 1 according to the invention, and variations produced thereof, that, in any case, do not depart from the scope of protection defined by the claims.

The vehicle 1 could comprise a single electrical battery 20 and/or more than one electrical motor 21.

The ramp 40 could slide with respect to the frame 2 between the extended and retracted positions.

The region 76a could be flat. In this case, the angles α1 measured at different points in the region 76a would have equal amplitudes. Alternatively or additionally, the region 76b could be flat. In this case, the angles α2 measured at different points in the region 76b would have equal amplitudes.

The vehicle 1 may include a different number of wheels 3, 4, 5 than illustrated. In particular, the vehicle 1 could only include the pair of front wheels 3, in particular steering wheels, and the pair of rear wheels 5 and not include the pair of wheels 4. In other words, the vehicle 1 could comprise four wheels instead of six. As an alternative or in addition to pair of front wheels 3, the pair of wheels 4 and/or the pair of wheels 5 could be drive wheels. In detail, the vehicle 1 might include one or more electrical motors integrated into the wheels 4 or the wheels 5, for example in the corresponding wheel rims.

## Claims

1. Vehicle (1) for transporting a motor vehicle (100) comprising a frame (2) and a plurality of wheels (3, 4, 5) rotatable relative to said frame (2) about respective rotational axes (A, B, C);
said frame (2) comprising, in turn:
- a cabin (7) adapted to house at least one driver of the vehicle (1); and
- a loading platform (6) adapted to support, in use, said motor vehicle (100) during transport;
said vehicle (1) further comprising a front end (1a) and a rear end (1b) opposite to each other along a first advancement direction (V) of said vehicle (1);
**characterized in that** said cabin (7) comprises:
- a first portion (7a), which extends between said front end (1a) and said loading platform (6) along a second longitudinal direction (X) of said vehicle (1); and
- a second portion (7b), which extends cantilevered from said first portion (7a) at said loading platform (6) along said second direction (X);
said second portion (7b) being at least in part spaced apart from said loading platform (6) along a third direction (Z), in use, vertical; said third direction (Z) being orthogonal to said second direction (X);
said second portion (7b) and said loading platform (6) defining a housing (60) adapted to house at least in part said motor vehicle (100) supported, in use, by said loading platform (6).

2. Vehicle according to claim 1, wherein said second portion (7b) comprises a surface (76) oriented towards the loading platform (6); said surface (76) delimiting said housing (60).

3. Vehicle according to claim 2, wherein proceeding from said front end (1a) towards said rear end (1b) parallel to said second longitudinal direction (X), the distance of the points of said surface (76) from said loading platform (6) along said third direction ((Z) progressively increases.

4. Vehicle according to claim 2 or 3, wherein said surface (76) comprises:
- a first region (76a) arranged on the side of said front end (1a); and
- a second region (76b) arranged on the side of said rear end (1b);
said first region (76a) forming first angles (α1) with respect to said loading platform (6) in a plane passing through said second and third directions (X, Z);
said second region (76b) forming second angles (α2) with respect to said loading platform (6) in a plane passing through said second and third directions (X, Z);
said first angles (α1) being smaller than said second angles (α2).

5. Vehicle according to any one of the foregoing claims, wherein said cabin (7) comprises:
- a main body (72);
- an opening (73) facing said front end (1a); and
- a door (74) movably coupled to said main body (72) and adapted to selectively obstruct said opening (73).

6. Vehicle according to any one of the foregoing claims, **characterized in that**, in use, the distance (d) between said loading platform (6) and the ground (S) on which said wheels (3, 4, 5) rest, in use, is smaller than 350 mm.

7. Vehicle according to any one of the foregoing claims, **characterized in that** it further comprises:
- at least one electrical battery (20) adapted to store, in use, electrical energy;
- at least one electrical motor (21) operatively connected to at least one of said wheels (3, 4, 5) and electrically connected to said electrical battery (20).

8. Vehicle according to claim 7, **characterized in that** said at least one electrical battery (20) is arranged beneath said loading platform (6) along said third direction (Z).

9. Vehicle according to any one of the foregoing claims, **characterized in that** the extension thereof along said second direction (X) is smaller than 7 m.

10. Vehicle according to any one of the foregoing claims, **characterized in that** it comprises a ramp (40), which is movable relative to said frame (2) between a retracted position, wherein it is adapted to be spaced away from said ground (S) and an extended position, wherein it is in contact with said ground (S).
